Europäisches Patentamt

European Patent Office

Office européen des brevets

(11) Veröffentlichungsnummer: **0 464 731 A2**

# EUROPÄISCHE PATENTANMELDUNG

(21) Anmeldenummer: **91110840.5**

(51) Int. Cl.⁵: **F02D 41/20**, F02D 41/22

(22) Anmeldetag: **28.06.91**

(30) Priorität: **29.06.90 DE 4020836**

(43) Veröffentlichungstag der Anmeldung:
**08.01.92 Patentblatt 92/02**

(84) Benannte Vertragsstaaten:
**DE ES FR GB IT NL SE**

(71) Anmelder: **Klöckner-Humboldt-Deutz
Aktiengesellschaft
Deutz-Mülheimer-Strasse 111 Postfach 80 05
09
W-5000 Köln 80(DE)**

(72) Erfinder: **Akbarian, Taghi
Rhonring 103
W-6100 Darmstadt(DE)**
Erfinder: **Wallenfang, Gerd
Wuppertalerstrasse 19
W-5000 Köln 90(DE)**

(54) **Steuervorrichtung für ein elektromagnetisches Ventil.**

(57) 2.1 Es ist eine Vorrichtung zur Steuerung eines elektromagnetischen Ventils bekannt, bei der das elektromagnetische Ventil von einer Steuerelektronik über eine Leistungsendstufe angesteuert wird. Diese Vorrichtung hat den Nachteil, daß ein Defekt der Steuerelektronik oder der Leistungsendstufe nicht erkannt wird.

2.2 Die Erfindung stellt eine Vorrichtung bereit, bei der ein zu dem elektromagnetischen Ventil führender Ausgang der Steuereinrichtung mit dem Eingang einer Schutzeinrichtung verschaltet ist, von der ein Ausgang mit einer Schalteinrichtung verbunden ist, wobei die Schalteinrichtung in einer Spannungsversorgungsleitung angebracht ist.

FIG. 1

(Stand der Technik)

Die Erfindung betrifft eine Vorrichtung und ein Verfahren zur Steuerung eines elektromagnetischen Ventils gemäß dem Oberbegriff der unabhängigen Patentansprüche.

Es ist aus der DE-OS 33 02 293 bekannt, ein elektromagnetisches Steuerventil (Magnetventil), beispielsweise für ein Kraftstoffeinspritzsystem für einer selbstzündenden Brennkraftmaschine, mit einer Steuervorrichtung zu betreiben, wobei die Steuervorrichtung aus einer Steuerelektronik und einer Leistungsendstufe besteht. Mit der Steuerelektronik werden Betriebsgrößen der Brennkraftmaschine erfaßt und die Leistungsendstufe entsprechend angesteuert, die wiederrum das elektromagnetische Steuerventil ansteuert.

Bei einem Ausfall oder Defekt der Steuerelektronik oder der Leistungsendstufe (Kurzschluß) bleibt das elektromagnetische Steuerventil geöffnet und der Kraftstoff kann unkontrolliert zu einem Brenner oder in einen Brennraum fließen. Bei der Verwendung von elektromagnetischen Ventilen bei der Kraftstoffzufuhr einer Brennkraftmaschine führt dieser unkontrollierte Kraftstofffluß zu einem Überdrehen und damit zu einer Beschädigung oder Zerstörung der Brennkraftmaschine. Bei Verwendung von elektromagnetischen Ventilen zur Kraftstoffzufuhr für einen Brenner besteht neben einem erhöhten Kraftstoffverbrauch eine sehr hohe Brand- und Explosionsgefahr.

Der Erfindung liegt die Aufgabe zugrunde, eine Vorrichtung und ein Verfahren bereitzustellen, mit der ein Ausfall oder Defekt der Steuerelektronik oder der Leistungsendstufe erkannt und eine daraus resultierende Fehlfunktion des elektromagnetischen Steuerventils vermieden wird.

Die Aufgabe der Erfindung wird dadurch gelöst, daß ein zu dem elektromagnetischen Ventil führender Ausgang der Steuervorrichtung mit dem Eingang einer Schutzeinrichtung verschaltet ist, von der ein Ausgang mit einer Schalteinrichtung verbunden ist, wobei die Schalteinrichtung in einer Spannungsversorgungsleitung angebracht ist. Somit ist sowohl ein Kurzschluß in der Leistungsendstufe als auch ein Defekt der Steuerelektronik feststellbar, da von der Schutzeinrichtung ein abnormaler Zustand, insbesondere eine abnormale Ausgangsspannung, der Leistungsendstufe erkannt und daraufhin die Schalteinrichtung betätigt wird, die die Leistungsendstufe und damit das elektromagnetische Ventil von einer Spannungsquelle trennt. Die erfindungsgemäße Steuervorrichtung wird in vorteilhafter Weise bei Kraftstoffeinspritzeinrichtungen von Brennkraftmaschinen eingesetzt. Darüber hinaus ist die Steuervorrichtung einsetzbar bei Brennern, insbesondere bei Brennern eines Partikelfiltersystems. Eine besondere Anwendung findet die erfindungsgemäße Steuervorrichtung bei der Überwachung der Regeneration von Partikelfiltern einer Dieselbrennkraftmaschine, bei dem die Regeneration zumindest in Abhängigkeit der mittels dem elektromagnetischen Ventil dem Brenner zugeführten Kraftstoffmenge durchgeführt wird. Im Fehlerfall der Zuführung von Kraftstoff (defekte Ansteuerung des Ventils) wird eine Beschädigung insbesondere des Partikelfilters vermieden oder des Brenners.

In Weiterbildung der Erfindung ist die Schalteinrichtung zwischen die Spannungsquelle und den Eingang der Leistungsendstufe geschaltet oder zwischen dem Ausgang der Leistungsendstufe und dem elektromagnetischen Ventil angebracht. Je nach konstruktiver und schaltungstechnischer Auslegung der Steuervorrichtung ist somit eine unterschiedliche Anbringung der Schalteinrichtung möglich. Ist die Leistungsendstufe der Steuervorrichtung als Transistor ausgebildet, wobei der Transistor von der Steuerelektronik angesteuert wird, hat dies zum Vorteil, daß die Steuerelektronik den erfaßten Betriebsparametern der Brennkraftmaschine entsprechende Taktsignale bildet oder in Digitalsignale umsetzt, die getaktet oder vorzugsweise pulsbreitenmoduliert an die Leistungsendstufe abgegeben werden. Damit ist eine genaue und effektive Steuerung des elektromagnetischen Ventils möglich.

In Weiterbildung der Erfindung ist eine Ausgangsspannung der Leistungsendstufe, die das elektromagnetische Ventil steuert, der Schutzeinrichtung zuführbar. Dies hat zum Vorteil, daß von der Schutzeinrichtung diese Ausgangsspannung auf Richtigkeit oder Defekt hin überprüft wird.

In Weiterbildung der Erfindung besteht die Schutzeinrichtung aus einer Schaltung zur Erzeugung eines Schaltsignals, mit dem eine nachgeschaltete Schalteinrichtung angesteuert wird. Damit ist nach Erkennen einer abnormalen Ausgangsspannung, bedingt durch einen Kurzschluß der Leistungsendstufe oder der Steuerelektronik, ein Abschalten der Spannungsversorgung des elektromagnetischen Ventils möglich, so daß ein ungehinderter Kraftstofffluß durch das geöffnete Ventil verhindert wird.

In Weiterbildung der Erfindung weist die Schaltung einen ersten Widerstand, der mit der Leitung der Spannungsversorgung und über einen Kondensator mit Masse verbunden ist, sowie einen zweiten Widerstand auf, der über eine Diode zwischen dem Ausgang der Leistungsendstufe und Masse der Spannungsquelle geschaltet ist. Weiterhin steht der der Masse abgewandte Anschluß des zweiten Widerstandes über eine Diode mit dem Verbindungspunkt des Kondensators und des ersten Widerstandes in Verbindung. Weiterhin weist die Schaltung eine Vergleichseinrichtung auf, der eine Bezugsspannung und die über dem Kondensator liegende Spannung zugeführt wird. Bei der Vergleichseinrichtung handelt es sich in vorteilhafter Weise um einen Operationsverstärker. Die Bezugsspannung wird von einem Spannungsteiler erzeugt, der aus einem dritten und vierten Widerstand besteht, wobei der Spannungsteiler zwischen der Versorgungsspannungsleitung und der Masse der Spannungsquelle angeordnet ist. Der Ausgang des Operationsverstärkers führt zu der Schaltungseinrichtung, wobei das Ausgangssignal des Operationsverstärkers über eine Diode der Schalteinrichtung zugeführt wird. Diese Schalteinrichtung besteht vorzugsweise aus einem Relais, das über einen Transistor von dem Ausgangssignal des Operationsverstärkers angesteuert wird. Bei einwandfreiem Betrieb (getaktetes Ventil) wird der Kondensator über die Diode und den zweiten Widerstand in den Ausschaltphasen des Transistors der Leistungsendstufe periodisch entladen. Der erste Widerstand ist hochohmig gegenüber dem zweiten Widerstand, so daß am Kondensator nur eine kleine Restspannung verbleibt. Wird das elektromagnetische Ventil durch einen Defekt dauernd angesteuert, wird der Verbindungspunkt der beiden Dioden über die Diode, die mit dem Ausgang der Leistungsendstufe verbunden ist, auf hoher Spannung gehalten, wodurch das periodische Entladen des Kondensators ausbleibt. Der Kondensator lädt sich über den ersten Widerstand auf, bis die Schaltschwelle des Operationsverstärkers überschritten wird.

Durch diesen Vergleich kann bei einem abnormalen Ausgangszustand der Leistungsendstufe von dem als Vergleicher geschalteten Operationsverstärker ein Ausgangssignal einer Schalteinrichtung zugeführt werden, die die Steuereinrichtung direkt von der Spannungsquelle trennt, so daß der unkontrollierte Kraftstoffluß unterbrochen wird. Nach Abschalten der Spannungsversorgung und gleichzeitigem Zuschalten der Spannungsversorgung auf den Spannungsteiler bleibt der Transistor für das Relais weiterhin leitend (Selbsthaltefunktion), damit die Schutzfunktion der Schutzschaltung voll erhalten bleibt und eine Behebung des Defektes erst erfolgen muß. Zu diesem Zweck ist bei einem entsprechenden Ausgangssignal der Vergleichseinrichtung auch die Abgabe eines Warnsignals (z.B. akustisch oder optisch) denkbar.

Die erfindungsgemäße Steuervorrichtung und das Verfahren sind alternativ einsetzbar bei einer Kraftstoffeinspritzvorrichtung einer Brennkraftmaschine oder bei der Steuerung eines Brenners, insbesondere eines Brenners eines Partikelfiltersystems. Ein besonderes Einsatzgebiet ist die Überwachung der elektromagnetischen Ventile der Kraftstoffeinspritzeinrichtung einer Dieselbrennkraftmaschine und des zumindest einen elektromagnetischen Ventiles des der Dieselbrennkraftmaschine nachgeschalteten Dieselpartikelfiltersystems.

Weitere erfindungsgemäße Ausgestaltungen der Steuervorrichtung sind in der folgenden Zeichnungsbeschreibung wiedergegeben.

Es zeigen:

Fig. 1:     Steuervorrichtung für ein elektromagnetisches Ventil nach dem Stand der Technik,

Fig. 2:     eine erfindungsgemäße Steuervorrichtung für ein elektromagnetisches Ventil,

Fig. 3:     erfindungsgemäße Schaltung der Schutz- und Schalteinrichtung.

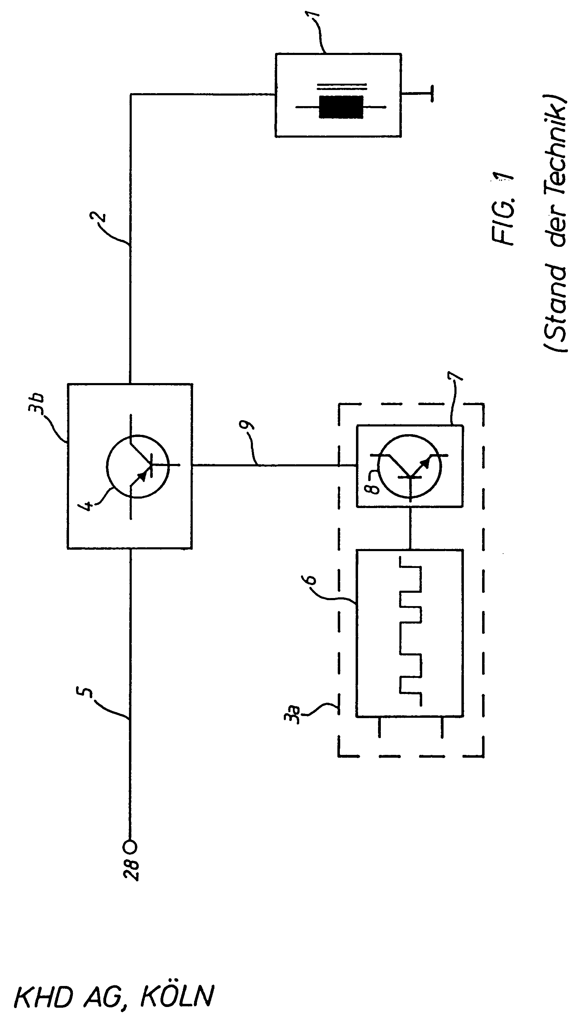

In Figur 1 ist eine Steuervorrichtung für ein elektromagnetisches Ventil nach dem Stand der Technik gezeigt. Ein elektromagnetisches Ventil 1 ist über eine Zuleitung 2 mit dem Ausgang einer Leistungsendstufe 3b der Steuervorrichtung 3 verbunden. Die Leistungsendstufe 3b besteht aus einem Leistungstransistor 4, wobei die Leistungsendstufe 3b über eine Spannungsversorgungsleitung 5 mit einer Spannungsquelle 28 verbunden ist. Die Steuervorrichtung 3 besteht weiterhin aus einer Steuerelektronik 3a, die in eine Taktschaltung 6 und eine Ansteuerstufe 7 unterteilt ist. Von der Taktschaltung 6 werden Betriebsparameter der Brennkraftmaschine aufgenommen und in Taktsignale umgewandelt, die an die Ansteuerstufe 7, die aus einem Ansteuertransistor 8 bestehen kann, weitergegeben werden. Die gesamte Steuerelektronik 3a ist über eine Steuerleitung 9 mit einem Eingang der Leistungsendstufe 3b verbunden.

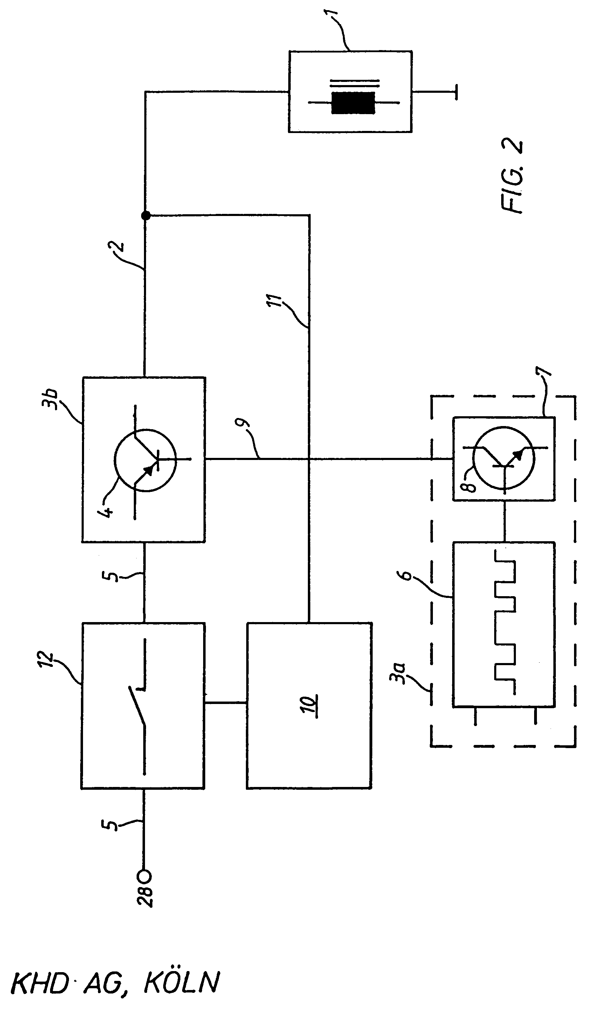

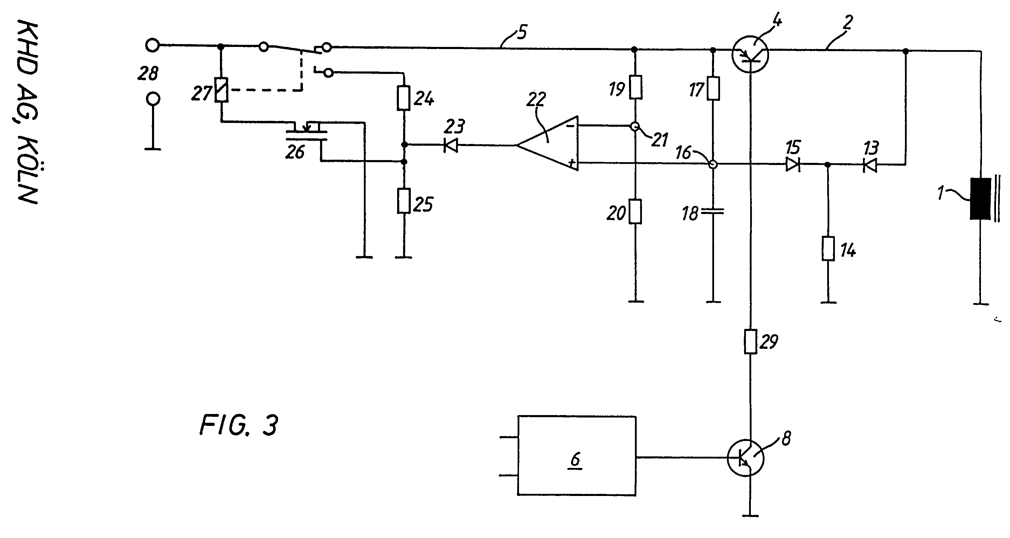

Fig. 2 zeigt eine erfindungsgemäße Steuervorrichtung für ein elektromagnetisches Ventil, wobei neben den in Fig. 1 gezeigten Komponenten noch eine Schutzeinrichtung 10 und eine Schalteinrichtung 12 vorhanden sind. Die Schutzeinrichtung 10 ist über eine Anschlußleitung 11 mit einem Ausgang der Leistungsendstufe 3b verbunden, während die Schalteinrichtung 12 der Schutzeinrichtung 10 direkt nachgeschaltet ist. Von einem Ausgang der Leistungsendstufe 3b wird über die Zuleitung 2 und die Anschlußleitung 11 die Ausgangsspannung der Leistungsendstufe 3b der Schutzeinrichtung 10 zugeführt. Die Schutzeinrichtung 10, die in Fig. 3 näher erläutert wird, wertet die Ausgangsspannung aus und gibt ein der Auswertung entsprechendes Ausgangssignal an die Schalteinrichtung 12, die in der Spannungsversorgungsleitung 5 zwischen der Spannungsquelle 28 und einem Eingang der Leistungsendstufe 3b angebracht ist.

Fig. 3 zeigt die erfindungsgemäße Schaltung der Schutzeinrichtung 10. In einem ersten Teil der Schaltung ist die Anode einer Diode 13 mit einem Ausgang der Leistungsendstufe 3b, hier dargestellt als Kollektor eines Transistors 4, verbunden, während die Kathode der Diode 1 über einen Widerstand 14 mit Masse verbunden ist. Der Verbindungspunkt der Diode 13 und des Widerstandes 14 ist über eine weitere Diode 15 mit einem ersten Bezugspunkt 16 verbunden. Zwischen dem ersten Bezugspunkt 16 und der Spannungsversorgungsleitung 5, die zu einem Eingang der Leistungsendstufe 3b, die hier als Emitter des Transistors 4 dargestellt ist, führt, ist ein Widerstand 17 geschaltet. Von dem ersten Bezugspunkt 16 liegt ein Kondensator 18 gegen Masse. Von der Spannungsversorgungsleitung 5 ist über Widerstände 19 und 20 gegen Masse ein Spannungsteiler realisiert, wobei die Ausgangsspannung des Spannungsteilers an einem Punkt 21 abgegriffen wird. Diesem ersten Teil der Schaltung ist ein weiterer Teil der Schaltung nachgeschaltet, wobei der weitere Teil aus einem Operationsverstärker 22 und einer Diode 23 besteht. Der Schalteinrichtung ist ein weiterer Spannungsteiler, bestehend aus Widerständen 24 und 25, sowie ein Transistor 26 und ein Relais 27 zugeordnet. Der invertierende Eingang des Operationsverstärkers 22 ist mit dem Punkt 21 verbunden, so daß diesem Eingang des Operationsverstärkers 22 eine mit den Widerständen 19 und 20 einstellbare Bezugsspannung zuführbar ist. Der nicht-invertierende Eingang des Operationsverstärkers 22 ist mit dem ersten Bezugspunkt 16 verbunden, an dem die an dem Kondensator 18 anliegende Spannung abgegriffen wird. Der Ausgang des Operationsverstärkers 22 ist über eine Diode 23 mit der Mitte des Spannungsteilers der Schalteinrichtung 12, bestehend aus den Widerständen 24 und 25, verbunden. Von diesem Punkt aus wird das Gate des Transistors 26 angesteuert, während die Source des Transistors 26 mit der Masse verbunden ist. Der Drain des Transistors 26 ist über die Erregerspule des Relais 27 mit der Spannungsquelle verbunden. Das Relais 27 weist einen Umschaltkontakt auf, der zum einen mit der Spannungsversorgungsleitung 5 in Verbindung steht und zum anderen, nach dem Umschaltvorgang, mit dem Widerstand 24 verbunden ist.

Die Schaltung arbeitet wie folgt:
Bei korrekter Funktion der Steuerelektronik 3a, der Ansteuerstufe 7 sowie der Leistungsendstufe 3b wird der Kondensator 18 über den Widerstand 17 aufgeladen und über den Widerstand 14 entladen. Für die jeweiligen Taktsignale, mit denen das elektromagnetische Ventil 1 angesteuert wird, wird sich der Kondensator 18 während einer Einschaltphase (High-Potential des Taktsignals) langsam aufladen und während einer Ausschaltphase (Low-Potential) sehr schnell entladen. Aufgrund der sehr schnellen Entladung des Kondensators 18 entsteht an dem ersten Bezugspunkt 16 nur eine kleine Restspannung. Sollte nun der Ansteuertransistor 8 oder der Leistungstransistor 4 einen Kurzschluß aufweisen, liegt an dem elektromagnetischen Ventil 1 und an dem Widerstand 14 die Versorgungsspannung, so daß sich der Kondensator 18 nicht mehr entladen kann. Dadurch wird sich der Kondensator weiter aufladen, wodurch die an dem ersten Bezugspunkt 16 anliegende Kondensatorspannung weiter steigt. Nach Überschreitung der an dem Punkt 21 anliegenden Bezugsspannung schaltet der Ausgang des Operationsverstärkers 22, so daß der Transistor 26 leitend wird. Infolgedessen schaltet der Arbeitskontakt des Relais 27 von der Spannungsversorgungsleitung 5 auf den Widerstand 24, so daß das elektromagnetische Ventil 1 von der Spannungsquelle getrennt wird. Durch Umschaltung der Spannungsquelle auf den Widerstand 24 bleibt der Transistor 26 weiterhin leitend (Selbsthaltefunktion). Erst nach Abschalten der Spannungsversorgung fällt das Relais 27 ab und unterbricht seinen Selbsthaltekreis. Wird die Versorgungsspannung wieder eingeschaltet, ohne daß der Fehler beseitigt wurde, schaltet die Schutzeinrichtung erneut ab. Für den Fall, daß eine manuelle Rücksetzung der Schutzeinrichtung 10 bzw. der Schalteinrichtung 12 gewünscht ist, kann beispielsweise ein Reset-Taster verwendet werden, der den Selbsthaltekreis des Relais 27 unterbricht. Weiterhin denkbar ist ebenfalls die Abgabe eines Warnsignals, das anzeigt, daß bei der Steuervorrichtung 3 für das elektromagnetische Ventil 1 ein Defekt vorliegt. Dies kann beispielsweise dadurch geschehen, daß das Ausgangssignal des Operationsverstärkers 22 über einen weiteren Transistor geleitet wird, der, gegebenenfalls über ein Relais, eine nicht gezeigte optische oder akustische Warneinrichtung betätigen kann.

Bei den erfaßten Größen handelt es sich beispielsweise um Betriebsgrößen der Brennkraftmaschine oder der Kraftstoffeinspritzeinrichtung (Druck, Temperatur, Drehzahl, Spannung, Zeigröße des elektromagnetischen Ventiles) und weitere geeignete Größen sowie deren Änderungs- beziehungsweise Grenzwerte. Ebenso sind Betriebsgrößen des Partikelfiltersystems (beispielsweise Temperatur vor und hinter dem Filter oder der Abgasgegendruck beispielsweise) heranziehbar.

**Patentansprüche**

1. Steuervorrichtung für ein elektromagnetisches Ventil, die eine Steuerelektronik und eine Leistungsendstufe zur Ansteuerung des elektromagnetischen Ventils in Abhängigkeit von erfaßten Größen aufweist,
dadurch gekennzeichnet, daß ein zu dem elektromagnetischen Ventil (1) führender Ausgang der Steuervorrichtung (3) mit dem Eingang einer Schutzeinrichtung (10) verschaltet ist, von der ein Ausgang mit einer Schalteinrichtung (12) verbunden ist, wobei die Schalteinrichtung (12) in einer Spannungsversorgungsleitung (5) angebracht ist.

2. Steuervorrichtung für ein elektromagnetisches Ventil nach Anspruch 1,
dadurch gekennzeichnet, daß die Schalteinrichtung (12) zwischen einer Spannungsquelle (28) und einem Eingang der Leistungsendstufe (3b) angebracht ist.

3. Steuervorrichtung für ein elektromagnetisches Ventil nach Anspruch 1,
dadurch gekennzeichnet, daß die Schalteinrichtung (12) zwischen den Ausgang der Leistungsendstufe (3b) und dem elektromagnetischen Ventil (1) geschaltet ist.

4. Steuervorrichtung für ein elektromagnetisches Ventil nach einem der vorhergehenden Ansprüche, dadurch gekennzeichnet, daß die Schaltung einen ersten Widerstand (17), der mit der Leitung der Spannungsversorgung (5) und über einen Kondensator (18) mit Masse verbunden ist, sowie einen zweiten Widerstand (14) aufweist, der über eine Diode (13) zwischen dem Ausgang der Leistungsendstufe und Masse der Spannungsversorgung geschaltet ist.

5. Steuervorrichtung für ein elektromagnetisches Ventil nach einem der vorhergehenden Ansprüche,
dadurch gekennzeichnet, daß der der Masse abgewandte Anschluß des zweiten Widerstandes (14) über eine Diode (15) mit dem Verbindungspunkt des Kondensators (18) und des ersten Widerstandes in Verbindung (17) steht.

6. Steuervorrichtung für ein elektromagnetisches Ventil nach einem der vorhergehenden Ansprüche,
dadurch gekennzeichnet, daß die Schaltung eine Vergleichseinrichtung aufweist, der eine Bezugsspannung und die über dem Kondensator (12) liegende Spannung zuführbar ist.

7. Steuervorrichtung für ein elektromagnetisches Ventil nach einem der vorhergehenden Ansprüche,
dadurch gekennzeichnet, daß die Vergleichseinrichtung als Operationsverstärker (22) ausgebildet ist und die Bezugsspannung von einem aus einem dritten und vierten Widerstand bestehenden Spannungsteiler (19, 20) erzeugbar ist.

8. Steuervorrichtung für ein elektromagnetisches Ventil nach einem der vorhergehenden Ansprüche,
dadurch gekennzeichnet, daß das Ausgangssignal vom Ausgang des Operationsverstärkers (22) über eine Diode (23) und einen weiteren Spannungsteiler (24, 25) der Schalteinrichtung (12), vorzugsweise bestehend aus einem Transistor (26) und einem Relais (27), zuführbar ist.

9. Steuervorrichtung für ein elektromagnetisches Ventil nach einem der vorhergehenden Ansprüche,
dadurch gekennzeichnet, daß die Steuervorrichtung an einem Brenner, insbesondere an einem Brenner eines Partikelfiltersystems einer Brennkraftmaschine, einsetzbar ist.

10. Verfahren zur Steuerung eines elektromagnetischen Ventils mit einer Steuervorrichtung, die eine Steuerelektronik und eine Leistungsendstufe zur Ansteuerung des elektromagnetischen Ventils in Abhängigkeit erfaßter Größen aufweist,
gekennzeichnet durch die folgenden Schritte:
- Zuführen einer Ausgangsgröße der Steuervorrichtung (3), vorzugsweise eine Ausgangsspannung, zu einer Schutzeinrichtung (10),
- Umformen der Ausgangsgröße in eine mit einer entsprechend erzeugten Bezugsgröße vergleichbaren Größe,
- Vergleich der umgeformten Ausgangsgröße mit der entsprechend erzeugten Bezugsgröße,
- Abgabe eines dem Vergleich entsprechenden Ausgangssignal, das einer Schalteinrichtung (12) zugeführt wird, die die Steuervorrichtung (3) von einer Spannungsquelle (28) trennt.

KHD AG, KÖLN

EP 0 464 731 A2

FIG. 1

(Stand der Technik)

FIG. 2

EP 0 464 731 A2

KHD AG, KÖLN

FIG. 3